(19) Europäisches Patentamt

European Patent Office

Office européen des brevets

(11) **EP 1 376 503 B1**

(12) **EUROPÄISCHE PATENTSCHRIFT**

(45) Veröffentlichungstag und Bekanntmachung des Hinweises auf die Patenterteilung:
**15.12.2004 Patentblatt 2004/51**

(51) Int Cl.⁷: **G08B 15/00**, H05B 37/02

(21) Anmeldenummer: **03012755.9**

(22) Anmeldetag: **05.06.2003**

(54) **Bewegungsmelder und Dämmerungsschalter mit einer Einrichtung zur Lichtschwelleneinstellung, sowie Verfahren zur Lichtschwelleneinstellung**

Motion detector and dusk to dawn switch with light intensity threshold adjustment and method of threshold adjustment

Détecteur de mouvement et interrupteur crepusculaire avec ajustement de seuil d'intensité de lumière et méthode d'ajustement de seuil

(84) Benannte Vertragsstaaten:
**AT CH DE LI**

(30) Priorität: **20.06.2002 DE 10227435**

(43) Veröffentlichungstag der Anmeldung:
**02.01.2004 Patentblatt 2004/01**

(73) Patentinhaber: **ABB PATENT GmbH**
**68526 Ladenburg (DE)**

(72) Erfinder:
• **Blomberg, Lothar, Dipl.-Ing.**
**58809 Neuenrarde (DE)**

• **Rümenapf, Peter, Dipl.-Ing.**
**58579 Schalksmühle (DE)**

(74) Vertreter: **Miller, Toivo et al**
**ABB Patent GmbH**
**Postfach 1140**
**68520 Ladenburg (DE)**

(56) Entgegenhaltungen:
**EP-A- 0 948 242        US-A- 6 160 352**

**Beschreibung**

Die Erfindung bezieht sich auf einen Präsenz- oder Bewegungsmelder mit einer Steuereinrichtung zur Ansteuerung eines Lastschaltglieds, an das eine Beleuchtungseinrichtung anschließbar ist, wobei ein Dämmerungsschalter vorhanden ist, der bewirkt, dass das Lastschaltglied nur dann aktiviert wird, wenn - außer einer Personendetektion - die mittels eines Tageslichtsensors detektierte Umgebungshelligkeit einen Lichtschwellwert unterschreitet. Außerdem bezieht sich die Erfindung auf einen Dämmerungsschalter, sowie auf Verfahren zur Lichtschwelleneinstellung.

Ein gattungsgemäßer Bewegungsmelder ist aus dem Fachbuch "Passiv-Infrarotbewegungsmelder", Verlag Moderne Industrie, Landsberg/Lech, 1996 bekannt und auf den Seiten 28 bis 35 beschrieben. Dort zeigt insbesondere Abb. 20 ein Blockschaltbild eines Bewegungsmelders mit Mikroprozessorsteuerung.

Aus der EP-A-0 948 242 sind ein Verfahren zum Steuern einer Beleuchtungseinrichtung sowie ein Präsenzmelder mit einem Infrarotsensor und einem Helligkeitssensor zum Schalten einer Beleuchtungseinrichtung bekannt, wobei die Beleuchtungseinrichtung bedarfsweise eingeschaltet wird, wenn das Signal des Helligkeitssensors unterhalb eines ersten Schwellenwertes liegt und zwangsweise abgeschaltet wird, wenn das Signal des Heiligkeitssensors einen zweiten Schwellenwert übersteigt, der größer ist als der erste Schwellenwert und größen als dasjenige Helligkeitssignal, das nach dem Einschalten der Beleuchtungseinrichtung aufgetreten ist. Es wird die Helligkeitsdifferenz vor und nach dem Einschalten der Beleuchtungseinrichtung ermittelt, um in Abhängigkeit dieser Helligkeitsdifferenz die Höhe des zweiten Schwellenwertes festzusetzen. Die Höhe des zweiten Schwellenwertes über dem ersten Schwellenwert kann im wesentlichen gleich der ermittelten Helligkeitsdifferenz sein. Die Höhe des zweiten Schwellenwertes über dem ersten Schwellenwert kann auch gleich der Höhe des ersten Schwellenwertes plus einem Hysteresebetrag sein.

Bei den meisten Bewegungsmeldern ist der Lichtschwellwert einstellbar, um einem Anwender die Wahl des für ihn richtigen Schwellwertes zu ermöglichen. In der Regel wird die Einstellung empirisch vorgenommen. Je nach subjektivem Empfinden wird im Nachhinein dann eine Korrektur des Stelltrimmers für den Lichtschwellwert vorgenommen. Hierfür muß sich der Anwender erneut Zugang zu dem Bewegungsmelder verschaffen, was einen gewissen Aufwand darstellt, da bei einer typischen Montagehöhe von 2,5 m eine entsprechend geeignete Leiter benutzt werden muß.

Aus diesen Gründen sind Einrichtungen entwickelt worden, die einem Kunden diese Arbeit ersparen sollen, und ihm die Möglichkeit leichterer Schwellwertfindung an die Hand geben sollen. Bekannt sind beispielsweise sogenannte Standardeinstellungen, die einen festen Lichtschwellwert vorgeben, der einer möglichst großen Kundenanzahl einen funktionell "akzeptablen" Wert vorgibt.

Die grundsätzliche anwendungstechnische Berechtigung solcher Standardeinstellungen mit festem Lichtschwellwert besteht darin, dass insbesondere bei Bewegungsmeldern im Außenbereich in erster Linie sichergestellt werden soll, dass bei Eintritt der Dunkelheit ein zum Haus führender Weg zwecks sicherer Begehbarkeit beleuchtet werden soll (ähnlich wie bei Straßenbeleuchtungen). So sind in der Regel Umgebungslichtwerte von ca. 20 Lux noch sehr gut ausreichend, bevor die Beleuchtung hinzugeschaltet wird. Auch bei Werten bis herunter zu ca. 2 Lux ist die Umgebung eigentlich noch relativ gut erkennbar. Es besteht hier in der Regel also nicht die Notwendigkeit, wie bei Bewegungs- oder Präsenzmeldern in Büroräumen, auch hohe Lichtschwellwerte realisieren zu müssen, sondern es ist im Fall der Außenwächter der interessierende Lichtschwellwert von vornherein einschränkbar. Er bewegt sich etwa zwischen 1 und 20 Lux, wobei die echte Notwendigkeit einer Lichteinschaltung mehr in Richtung des ersteren dieser beiden Werte besteht. Dennoch sind auch die Werte in Richtung des 20-Lux-Wertes nicht ganz uninteressant. Würde z. B. eine Straßenlaterne ein Fremdlicht erzeugen, das in der Nähe des Bewegungsmelders dann noch beispielsweise 15 Lux betrüge, und im angenommen Fall einer fest vorgegeben Schwelle von beispielsweise 10 Lux eine Lichteinschaltung des Bewegungsmelders verhindern würde, so wäre der funktionelle Einsatz in diesem Fall ja ganz in Frage zu stellen. Ein Anwender des Bewegungsmelders erwartet auch in solchen Fällen während der Dunkelphase eine Lichteinschaltung.

Auch bei Einschränkung auf einen reduzierten "interessierenden" Bereich von etwa 1 bis 20 Lux besteht dennoch die oben genannte Problematik. Denn zum einen sollte der Bewegungsmelder nicht bereits bei sehr geringer Abenddämmerung, zum anderen nicht erst bei stark fortgeschrittener Dunkelheit schaltbereit sein. Der auch denkbare und mögliche Fall, daß gar keine Schaltbereitschaft aufgrund zu hoher Fremdlichtanteile, z. B. durch eine Straßenlaterne, stattfindet, ist nicht akzeptabel. Daher findet ein Kompromiss meist dahingehend statt, daß der Lichtschwellwert eher zu hoch als zu niedrig gewählt wird, was aber andererseits zu einer zu frühen Aktivierung bei schon geringer Abenddämmerung führt. Dieser Effekt darf auf keinen Fall unterbewertet werden, da es für den Kunden auch unter Energieeinsparungsgesichtspunkten nicht akzeptabel ist, wenn der Bewegungsmelder unnötig das Licht einschaltet. Ebenso ergäbe sich in den Morgenstunden eine relativ späte Deaktivierung, wenn bei Tagesanbruch die damit verbundene Helligkeitszunahme schon recht weit fortgeschritten ist.

Alle Randbedingungen gleichzeitig zu erfüllen unter zusätzlicher Berücksichtigung individueller Empfindungen, stellt bei bekannten Geräten mit Standardeinstellungen somit eine kaum lösbare Aufgabe dar.

Es sind auch Geräte bekannt, bei denen der Lichtschwellwert per Fernbedienung oder per Tastendruck am Bewegungsmelder abgespeichert wird. Dieses bedingt aber, daß die Abspeicherung gerade zu dem Zeitpunkt vorgenommen werden muß, zu dem der Umgebungslichtwert die gewünschte Schwelle durchschreitet. Außerdem ist der Aufwand von Fernbedienungssystemen nicht unerheblich. Im Fall der Lichtschwellenwert-Abspeicherung am Bewegungsmelder per Tastendruck ist wiederum eine Leiter nötig.

Die dargelegten Probleme ergeben sich auch bei reinen Dämmerungsschaltern, also Geräten ohne Personendetektion.

Der Erfindung liegt daher die Aufgabe zugrunde, einen Bewegungsmelder oder einen Dämmerungsschalter sowie ein entsprechendes Verfahren anzugeben, bei denen einem Kunden die komplizierte Einstellung des Lichtschwellwertes und/oder die Anschaffung eines Systems mit Fernbedienung erspart bleibt. Die unterschiedlichen Fremdlichtsituationen sollen automatisch Berücksichtigung finden.

Diese Aufgabe wird durch einen Präsenz- oder Bewegungsmelder gelöst, der die im Anspruch 1 angegebenen Merkmale aufweist. Ein Dämmerungschalter und alternative Verfahren zur Lichtschwelleneinstellung, sowie jeweils vorteilhafte Ausgestaltungen sind in weiteren Ansprüchen angegeben.

Beim erfindungsgemäßen Gegenstand wird demnach ein Lichtschwellenwert durch Analyse von Umgebungslichtwerten ermittelt, die über einen geeigneten Zeitraum - das sind die Nachtstunden - erfaßt wurden. Diese Erfassung und Auswertung von Umgebungslichtwerten wird fortlaufend wiederholt, wodurch ein geeigneter Lichtschwellenwert nicht nur einmalig selbsttätig ermittelt wird, sondern selbstlernend an sich ändernde Umgebungsbedingungen angepaßt wird. Es versteht sich, dass Zeitabschnitte, in denen von einem Bewegungsmelder oder Dämmerungsschalter eine Beleuchtung eingeschaltet wurde, unberücksichtigt bleiben. Durch Berücksichtigung eines Hysteresewerts und eines Offsetwerts wird ein stabiler Betrieb gewährleistet.

Bei Verwendung eines üblichen Bewegungsmelders mit Mikroprozessor wird vorteilhaft kein Hardware-Mehraufwand benötigt, um die erfindungsgemäßen Funktionen zu realisieren. Gegebenenfalls auch als zusätzliche besondere Betriebsart. Gemäß einer vorteilhaften Ausgestaltung wird außerdem der Gradient einer Umgebungslichtwerteänderung berücksichtigt.

Eine weitere Erläuterung der Erfindung erfolgt nachstehend anhand eines Ausführungsbeispiels eines Bewegungsmelders, das in der Zeichnung dargestellt ist.

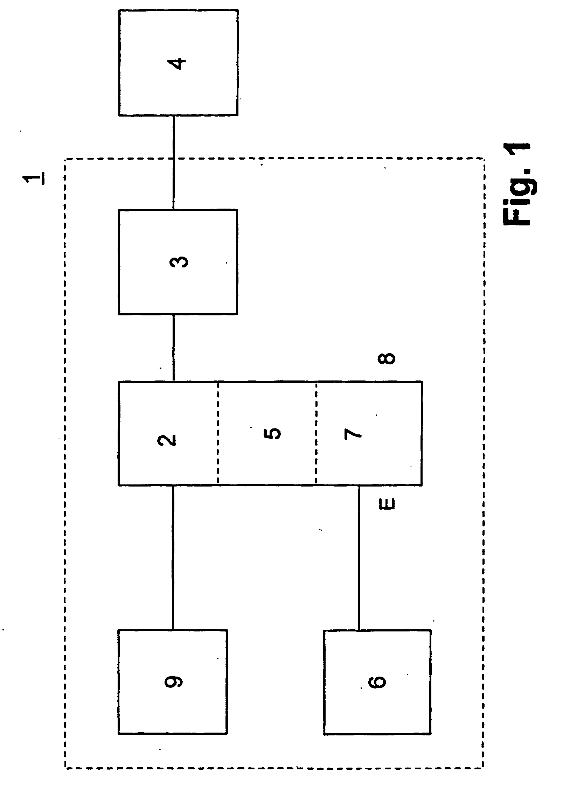

Fig. 1 zeigt ein Blockschema eines Bewegungsmelders 1, der einen Mikroprozessor 8 aufweist, dem das Ausgangssignal von Funktionseinheiten 9 zur Personendetektion zugeführt sind. Die Funktionseinheiten 9 enthalten in üblicher Weise erforderliche Sensoren, Linsen, Spiegel, Verstärker, AD-Wandler und Filter. Dem Mikroprozessor 8 sind außerdem Umgebungslichtwerte E zugeführt, die mittels eines Tageslichtsensors 6 erfaßt werden. Der Mikroprozessor 8 steuert ein Lastschaltglied 3 an, an das eine Beleuchtungseinrichtung 4 anschließbar ist. Der Mikroprozessor 8 enthält Programme zur Realisierung der Funktion einer Steuereinrichtung 2 zur Ansteuerung des Lastschaltglieds 3, eines Dämmerungsschalters 5 und einer Einrichtung zur Lichtschwellwert-Bildung 7, die einen A/D-Wandler zur Digitalisierung der Umgebungslichtwerte E enthält.

Die Arbeitsweise des Bewegungsmelders wird nachstehend erläutert, und damit auch ein Verfahren zur Lichtschwellwertbildung.

Die Umgebungslichtwerte E werden im Mikroprozessor 8 laufend erfaßt und der in der Wertereihe eines definierten Zeitabschnitts T auftretende Minimalwert $E_{min}$ der Umgebungslichtwerte ermittelt und als minimaler Lichtschwellenwert $E_{smin}$ gespeichert. Dabei werden nur die Zeiträume, in denen die vom Bewegungsmelder geschaltete Beleuchtung ausgeschaltet ist, berücksichtigt.

Auf den ermittelten Minimalwert $E_{smin}$ wird ein Hysteresewert $E_{Hys}$, vorzugsweise direkt proportional zum Wert $E_{smin}$ aufaddiert und der sich daraus ergebende Wert als zunächst gültiger Lichtschwellwert $E_s$ herangezogen.

Es gilt dann: $E_s = E_{smin} + E_{Hys}$, wobei $E_{Hys} = k \times E_{smin}$ gewählt werden kann.
Mit z. B. k = 0,3 ergäbe sich $E_s$ zu 1,3 $E_{smin}$.

Durch diese Maßnahme wird sichergestellt, daß eine Anpassung an den jeweils vorhandenen Helligkeitswert des Fremdlichtes stattfindet. Der Hysteresewert soll verhindern, daß geringe Erhöhungen des Restlichtes zu einer Deaktivierung führen.

Sollte der Fremdlichtanteil sehr gering oder gleich Null sein, könnte sich das technische Problem ergeben, dass aufgrund des damit verbundenen geringen Hysteresewertes äußere Lichteinflüsse, also eine Erhöhung der Fremdlichtstärke, zu einer Deaktivierung des Gerätes führen. Aus diesem Grund wird vorgeschlagen, auf den ermittelten Schwellwert einen Offsetwert $E_{Offs}$ aufzuaddieren. Bevorzugt werden Offsetwerte $E_{Offs}$ im Bereich von 0,5 bis 2 Lux.

Dann gilt: $E_s = E_{smin} + E_{Hys} + E_{Offs}$, bzw. $E_s = (1+k) E_{smin} + E_{Offs}$.

Die Ermittlung des in jeder Nacht auftretenden $E_{min}$-Wertes wird integrierend berechnet, um einzelnen Fehlmessungen oder ungewöhnlichen Ereignissen keinen nennenswerten Einfluß zu ermöglichen; ebenso wird bei jeweiliger Festlegung des Lichtschwellwertes $E_s$ nicht nur der ermittelte $E_{min}$-Wert der vorausgegangenen Nacht, sondern auch die $E_{min}$-Werte der davorliegenden Nächte integrierend berücksichtigt. Eine zusätzliche Option ist wahlweise möglich, indem auch ein oberer Lichtschwellgrenzwert $E_{smax}$ definiert wird, der für den Fall, dass der momentan gültige und festgelegte Lichtschwellwert $E_s$ gleich oder größer wird als $E_{smax}$,

eine Beleuchtungseinschaltung verhindert. Damit wird die bereits erwähnte Reduzierung auf den interessierenden" Lichtschwellwertbereich sichergestellt. Die automatische Anpassung des Lichtschwellwertes $E_s$ bewegt sich also dann innerhalb der Grenzen $E_s = E_{Offs}$ (für $E_{min}=0$) und $E_s = E_{smax}$.

Besonders im Fall der vorbeschriebenen Vorgehensweise, bei der Meßergebnisse aus mehreren Nächten zur Bestimmung des Lichtschwellwertes $E_s$ herangezogen werden, könnte eine plötzliche Fremdlichtzunahme dazu führen, dass der in einer Nachtphase erfaßte Lichtwert E nicht den aktuellen Schwellwert $E_s$ unterschreitet, also keine Schaltfunktion gegeben ist.

Um auch in einem solchen Fall bei fortgeschrittener Dämmerung eine Schaltfunktion zu erreichen, kann zusätzlich der Gradient des Lichtwerteverlaufes $\Delta E/\Delta t$ beobachtet und zur Aktivierung der Schaltbereitschaft eines Bewegungsmelders oder zur Auslösung der Schaltfunktion eines Dämmerungsschalters herangezogen werden

Beobachtung des Gradienten des Lichtwerteverlaufes $\Delta E/\Delta t$ bedeutet dabei, daß die Abenddämmerung durch Ermittlung des abhängig von der Zeit t beispielsweise exponentiell abnehmenden Lichtwertes E erfaßt wird und eine definierte, schließlich nur noch kleine Änderung $(-\Delta E/\Delta t)_{reduziert}$ zur Aktivierung der Schaltfunktion herangezogen wird.

Auch in diesem Fall kann ein oberer Lichtschwellgrenzwert $E_{smax}$ definiert und dafür genutzt werden, nur dann die Einschaltung einer Beleuchtung freizugeben, wenn der erfaßte Lichtwert E kleiner als der obere Lichtschwellgrenzwert $E_{smax}$ ist, für den vorzugsweise ein Wert im Bereich von 5 bis 20 Lux gewählt wird.

## Patentansprüche

1. Präsenz- oder Bewegungsmelder (1) mit einer Steuereinrichtung (2) zur Ansteuerung eines Lastschaltglieds (3), an das eine Beleuchtungseinrichtung (4) anschließbar ist, wobei ein Dämmerungsschalter (5) vorhanden ist, der bewirkt, dass das Lastschaltglied (3) - im Fall einer Personendetektion - nur dann aktiviert wird, wenn die mittels eines Tageslichtsensors (6) detektierte Umgebungshelligkeit E einen Lichtschwellwert Es unterschreitet, **dadurch gekennzeichnet, daß** eine Lichtschwellwertbildungs-Einrichtung (7) vorhanden ist, die den im Präsenz- oder Bewegungsmelder (1) verwendeten Lichtschwellwert Es selbsttätig ermittelt und dynamisch an sich verändernde Umgebungslichtverhältnisse anpasst, wobei die Lichtschwellwertbildungs-Einrichtung (7) dafür eingerichtet ist, aus einer Reihe von über einen definierten Zeitraum T erfassten Umgebungslichtwerten E jeweils Minimalwerte der Umgebungshelligkeit $E_{min}$ zu ermitteln, daraus einen minimalen Lichtschwellwert $E_{smin}$ zu bilden, und zur Bildung des Lichtschwellwert Es

dem minimalen Lichtschwellwert $E_{smin}$ einen Hysteresewert $E_{Hys}$ aufzuaddieren.

2. Präsenz- oder Bewegungsmelder (1) nach Anspruch 1, **dadurch gekennzeichnet, daß** die Lichtschwellwertbildungs-Einrichtung (7) dafür eingerichtet ist, den Lichtschwellwert Es gemäß nachstehender Gleichung zu bestimmen:

$$E_s = (1+k)E_{smin} + E_{Offs} ,$$

worin bedeuten:

$E_{smin}$ entspricht dem Minimalwert der Umgebungshelligkeit, der aus einer Reihe von über einen definierten Zeitraum T erfassten Umgebungslichtwerten E ermittelt wird, wobei Zeiträume, in denen eine Beleuchtungseinrichtung (4) eingeschaltet ist, nicht berücksichtigt werden,

k ist eine Konstante zur Berücksichtigung einer Hysterese, und

$E_{Offs}$ ist ein gewählter Offsetwert, der vorzugsweise im Bereich von 0,5 bis 2 Lux liegt.

3. Präsenz- oder Bewegungsmelder (1) nach Anspruch 1 oder 2, **dadurch gekennzeichnet, dass** die Lichtschwellwertbildungs-Einrichtung (7) dafür eingerichtet ist, außerdem den Gradienten $\Delta E/\Delta t$ der Umgebungslichtwerteänderung zu ermitteln und diesen Gradienten zusätzlich zur Aktivierung des Lastschaltglieds (3) heranzuziehen.

4. Präsenz- oder Bewegungsmelder (1) nach einem der vorstehenden Ansprüche, **dadurch gekennzeichnet, dass** die Lichtschwellwertbildungs-Einrichtung (7), die Steuereinrichtung (2) und der Dämmerungsschalter (5) mittels eines Mikroprozessors (8) realisiert sind.

5. Präsenz- oder Bewegungsmelder (1) nach einem der vorstehenden Ansprüche, **dadurch gekennzeichnet, dass** die Lichtschwellwertbildungs-Einrichtung (7) dafür eingerichtet ist, den Lichtschwellwert $E_s$ auf einen maximalen Lichtschwellwert $E_{smax}$ zu begrenzen, der vorzugsweise im Bereich von 5 bis 20 Lux liegt.

6. Dämmerungsschalter mit einem Lastschaltglied, der dafür eingerichtet ist, dass das Lastschaltglied dann aktiviert wird, wenn die mittels eines Tageslichtsensors detektierte Umgebungshelligkeit E einen Lichtschwellwert Es unterschreitet, **dadurch gekennzeichnet, daß** eine Lichtschwellwertbildungs-Einrichtung vorhanden ist, die den im Däm-

merungsschalter verwendeten Lichtschwellwert $E_s$ selbsttätig ermittelt und dynamisch an sich verändernde Umgebungslichtverhältnisse anpasst, wobei die Lichtschwellwertbildungs-Einrichtung dafür eingerichtet ist, aus einer Reihe von über einen definierten Zeitraum T erfassten Umgebungslichtwerten E jeweils Minimalwerte der Umgebungshelligkeit $E_{min}$ zu ermitteln, daraus einen minimalen Lichtschwellwert $E_{smin}$ zu bilden, und zur Bildung des Lichtschwellwert $E_s$ dem minimalen Lichtschwellwert $E_{smin}$ einen Hysteresewert $E_{Hys}$ aufzuaddieren.

7. Dämmerungsschalter nach Anspruch 6, **dadurch gekennzeichnet, daß** die Lichtschwellwertbildungs-Einrichtung dafür eingerichtet ist, den Lichtschwellwert $E_s$ gemäß nachstehender Gleichung zu bestimmen:

$$Es = (1+k)E_{smin} + E_{Offs} \ ,$$

worin bedeuten:

$E_{smin}$ entspricht dem Minimalwert der Umgebungshelligkeit, der aus einer Reihe von über einen definierten Zeitraum T erfassten Umgebungslichtwerten E ermittelt wird, wobei Zeiträume, in denen eine Beleuchtungseinrichtung (4) eingeschaltet ist, nicht berücksichtigt werden,

k ist eine Konstante zur Berücksichtigung einer Hysterese, und

$E_{Offs}$ ist ein gewählter Offsetwert, der vorzugsweise im Bereich von 0,5 bis 2 Lux liegt.

8. Dämmerungsschalter nach Anspruch 6 oder 7, **dadurch gekennzeichnet, dass** die Lichtschwellwertbildungs-Einrichtung dafür eingerichtet ist, außerdem den Gradienten $\Delta E / \Delta t$ der Umgebungslichtwerteänderung zu ermitteln und diesen Gradienten zusätzlich zur Aktivierung des Lastschaltglieds heranzuziehen.

9. Dämmerungsschalter nach einem der Ansprüche 6 bis 8, **dadurch gekennzeichnet, dass** die Lichtschwellwertbildungs-Einrichtung dafür eingerichtet ist, den Lichtschwellwert $E_s$ auf einen maximalen Lichtschwellwert $E_{smax}$ zu begrenzen, der vorzugsweise im Bereich von 5 bis 20 Lux liegt.

10. Verfahren zur Lichtschwellwert-Bildung in einem Dämmerungsschalter oder Präsenz- oder Bewegungsmelder, in welchem ein selbsttätig ermittelter und dynamisch an Umgebungslichtänderungen angepasster Lichtschwellwert Es zur Aktivierung eines Lastschaltglieds - beim Präsenz- oder Bewegungsmelder im Fall einer Personendetektion - verwendet wird, und wobei

a) Umgebungslichtwerte E fortlaufend erfasst werden,
b) aus den erfassten Umgebungslichtwerten E kontinuierlich durch Auswertung von Umgebungslichtwerten E, die in wenigstens einem definierten Zeitraum T liegen, ein jeweiliger Minimalwert $E_{min}$ der Umgebungshelligkeit und daraus ein minimaler Lichtschwellwert $E_{smin}$ ermittelt und auf diese Weise auch dynamisch angepasst wird, wobei Zeiträume, in denen eine am Lastschaltglied (3) angeschlossene Beleuchtungseinrichtung (4) eingeschaltet ist, nicht berücksichtigt werden,
c) mittels einer Konstanten k eine Hysterese berücksichtigt wird,
d) außerdem ein Offsetwert $E_{Offs}$ berücksichtigt wird, und
e) der jeweilige Lichtschwellwert Es ermittelt wird nach' der Beziehung $E_s = (1+k)E_{smin} + E_{Offs}$.

11. Verfahren nach Anspruch 10, **dadurch gekennzeichnet, dass** für die Konstante k ein Wert im Bereich 0,1 bis 0,5 gewählt wird.

12. Verfahren nach Anspruch 10 oder 11, **dadurch gekennzeichnet, dass** für den Zeitraum T Dämmerungs- und Nachtstunden eines 24-Stunden-Zyklusses oder mehrerer 24-Stunden-Zyklen gewählt werden.

13. Verfahren nach einem der Ansprüche 10 bis 12, **dadurch gekennzeichnet, dass** der Lichtschwellwert $E_s$ auf einen maximalen Lichtschwellwert $E_{smax}$ begrenzt wird, der vorzugsweise im Bereich von 5 bis 20 Lux liegt.

14. Verfahren nach einem der Ansprüche 10 bis 13, **dadurch gekennzeichnet, dass** ein selbsttätig ermittelter und dynamisch an Umgebungslichtänderungen angepasster Dämmerungswert zur Aktivierung eines Lastschaltglieds - beim Präsenz- oder Bewegungsmelder im Fall einer Personendetektion - verwendet wird, wobei zur Erfassung einer Dämmerung der Gradient $\Delta E/\Delta t$ der Umgebungslichtwerteänderung ermittelt und bei Erreichen einer definierten kleinen Änderung der Lichtwerteabnahme $-(\Delta E/\Delta t)_{reduziert}$ die Aktivierung des Lastschaltglieds freigegeben wird.

15. Verfahren nach Anspruch 14, **dadurch gekennzeichnet, daß** zur Freigabe der Aktivierung des Lastschaltglieds außerdem ein definierter maximaler Lichtschwellwert $E_{smax}$ herangezogen wird.

## Claims

1. A presence or motion detector (1) with a control device (2) for triggering a load switching element (3) to which a lighting device (4) can be connected, with a photo-electric lighting controller (5) being present which ensures that the load switching element (3), in the case of the detection of a person, will only be activated when the ambient luminosity E which is detected by means of a daylight sensor (6) falls below a light threshold value $E_s$, **characterized in that** a light threshold value formation device (7) is present which automatically determines the light threshold value $E_s$ used in the presence or motion detector (1) and adjusts the same dynamically to changing ambient light conditions, with the light threshold value formation device (7) being configured to determine minimum values of the ambient luminosity $E_{min}$ from a series of ambient light values E detected over a defined time period T, to form therefrom a minimum light threshold value $E_{min}$ and to add to the minimum light threshold value $E_{min}$ a hysteresis value $E_{hys}$ for the purpose of forming the light threshold value $E_s$.

2. A presence or motion detector (1) according to claim 1, **characterized in that** the light threshold value formation device (7) is configured to determine the light threshold value $E_s$ according to the following equation:

$$E_s = (1+k)\, E_{smin} + E_{Offs},$$

   with the meaning thereof being:

   $E_{smin}$ corresponds to the minimum value of the ambient luminosity which is determined from a series of ambient light values E obtained over a defined time period T, with time periods in which the lighting device (4) is switched on not being considered;
   k is a constant for considering a hysteresis, and $E_{Offs}$ is a chosen offset value which preferably lies in the region of 0.5 to 2 luxes.

3. A presence or motion detector (1) according to claim 1 or 2, **characterized in that** the light threshold value formation device (7) is configured to also determine the gradient $\Delta E/\Delta t$ of the change in the value of the ambient luminosity and to use these gradients additionally for the activation of the load switching element (3).

4. A presence or motion detector (1) according to one of the preceding claims, **characterized in that** the light threshold value formation device (7), the control device (2) and the photo-electric lighting controller (5) are realized by means of a microprocessor (8).

5. A presence or motion detector (1) according to one of the preceding claims, **characterized in that** the light threshold value formation device (7) is configured to limit the light threshold value $E_s$ to a maximum light threshold value $E_{smax}$ which is preferably in the region of 5 to 20 luxes.

6. A photo-electric lighting controller with a load switching element which is configured so that the load switching element is activated when the ambient luminosity E, which is detected by means of a daylight sensor, falls below a light threshold value $E_s$, **characterized in that** a light threshold value formation device is present which automatically determines the light threshold value $E_s$ as used in the photo-electric lighting controller and adjusts the same dynamically to changing ambient light conditions, with the light threshold value formation device (7) being configured to determine minimum values of the ambient luminosity $E_{min}$ from a series of ambient light values E detected over a defined time period T, to form therefrom a minimum light threshold value $E_{min}$ and to add to the minimum light threshold value $E_{min}$ a hysteresis value $E_{hys}$ for the purpose of forming the light threshold value $E_s$.

7. A photo-electric lighting controller according to claim 6, **characterized in that** the light threshold value formation device is configured to determine the light threshold value $E_s$ according to the following equation:

$$E_s = (1+k)\, E_{smin} + E_{Offs},$$

   with the meaning thereof being:

   $E_{smin}$ corresponds to the minimum value of the ambient luminosity which is determined from a series of ambient light values E obtained over a defined time period T, with time periods in which the lighting device (4) is switched on not being considered;
   k is a constant for considering a hysteresis, and $E_{Offs}$ is a chosen offset value which preferably lies in the region of 0.5 to 2 luxes.

8. A photo-electric lighting controller according to claim 6, **characterized in that** the light threshold value formation device is configured to also determine the gradient $\Delta E/\Delta t$ of the change in the value of the ambient luminosity and to use these gradients additionally for the activation of the load switching element.

**9.** A photo-electric lighting controller according to one of the claims 6 to 8, **characterized in that** the light threshold value formation device is configured to limit the light threshold value $E_s$ to a maximum light threshold value $E_{smax}$ which is preferably in the region of 5 to 20 luxes.

**10.** A method for light threshold formation in a photo-electric lighting controller or presence and motion detector, in which an automatically determined light threshold value $E_s$ which is adjusted dynamically to the ambient luminosity changes is used for activating a load switching element, which in the case of a presence or motion detector applies when a person is detected, and with

a) ambient luminosity values E being detected continually;
b) a respective minimum value $E_{min}$ of the ambient luminosity being detected from the obtained ambient luminosity values E in a continual fashion by evaluation of the ambient luminosity values E which lie at least within a defined time period T and therefrom a minimum light threshold value $E_{min}$ is determined and in this way is also adjusted dynamically, with time periods not being considered in which a lighting device (4) connected to the load switching member (3) is activated;
c) a hysteresis being taken into account by means of a constant K;
d) moreover an offset value $E_{Offs}$ being considered, and
e) the respective light threshold value $E_s$ being determined according to the relationship Es = $(1+k)\ E_{smin} + E_{Offs}$.

**11.** A method according to claim 10, **characterized in that** a value in the range of 0.1 to 0.5 is chosen for the constant k.

**12.** A method according to claim 10 or 11, **characterized in that** twilight and night hours of a 24 hour cycle or several 24 hour cycles are chosen for the time period T.

**13.** A method according to one of the claims 10 to 12, **characterized in that** the light threshold value $E_s$ is limited to a maximum light threshold value $E_{smax}$ which is preferably in the region of 5 to 20 luxes.

**14.** A method according to one of the claims 10 to 13, **characterized in that** a twilight value which is determined automatically and is adjusted dynamically to the ambient luminosity conditions is used for activating a load switching element, which in the case of a presence or motion detector applies when a person is detected, with the gradient $\Delta E/\Delta t$ of the ambient luminosity change being determined for detecting a twilight and on reaching a defined small change in the decrease of the light value $-(\Delta E/\Delta t)_{reduced}$ the activation of the load switching element is released.

**15.** A method according to claim 14, **characterized in that** for releasing the activation of the load switching element a defined maximum light threshold value $E_{smax}$ is used in addition.

**Revendications**

**1.** Détecteur de présence ou de mouvement (1) avec un dispositif de commande (2) pour actionner un commutateur de réglage en charge (3) auquel est destiné à être connecté un système d'éclairage (4), un interrupteur crépusculaire (5) étant présent et veillant à ce que le commutateur de réglage en charge (3) ne soit activé que lorsque, dans le cas de détection de personne, la luminosité ambiante E détectée au moyen d'un détecteur de la lumière du jour (6) est inférieure à une valeur seuil de luminosité $E_s$, **caractérisé en ce qu'**il est prévu un système pour déterminer la valeur seuil de luminosité (7) qui détermine automatiquement la valeur seuil de luminosité $E_s$ utilisée dans le détecteur de présence ou de mouvement (1) et adapte celle-ci dynamiquement à des conditions de luminosité ambiante changeantes, le système pour déterminer la valeur seuil de luminosité (7) étant adapté pour déterminer les valeurs minimum respectives de la luminosité ambiante $E_{min}$ à partir d'une série de valeurs de luminosité ambiante E enregistrées pendant une période de temps T définie, pour déterminer à partir de là une valeur seuil de luminosité minimum $E_{smin}$ et pour ajouter à la valeur seuil de luminosité minimum $E_{smin}$ une valeur d'hystérésis $E_{Hys}$ afin d'obtenir la valeur seuil de luminosité $E_s$.

**2.** Détecteur de présence ou de mouvement (1) selon la revendication 1, **caractérisé en ce que** le système pour déterminer la valeur seuil de luminosité (7) est adapté pour déterminer la valeur seuil de luminosité $E_s$ d'après l'équation suivante :

$$E_s = (1+k)E_{smin} + E_{Offs},$$

où
$E_{smin}$ correspond à la valeur minimum de la luminosité ambiante déterminée à partir d'une série de valeurs de luminosité ambiante E enregistrées pendant une période de temps T définie, les périodes de temps pendant lesquelles un système d'éclairage (4) est allumé n'étant pas prises en considération,

k est une constante pour tenir compte d'une hystérésis et

$E_{Offs}$ est une valeur de décalage choisie qui est de préférence comprise entre 0,5 et 2 Lux.

3. Détecteur de présence ou de mouvement (1) selon la revendication 1 ou 2, **caractérisé en ce que** le système pour déterminer la valeur seuil de luminosité (7) est adapté pour déterminer en outre le gradient $\Delta E/\Delta t$ des changements dans les valeurs de luminosité ambiante et d'utiliser en supplément ce gradient pour activer le commutateur de réglage en charge (3).

4. Détecteur de présence ou de mouvement (1) selon l'une quelconque des revendications précédentes, **caractérisé en ce que** le système pour déterminer la valeur seuil de luminosité (7), le dispositif de commande (2) et l'interrupteur crépusculaire (5) sont réalisés au moyen d'un microprocesseur (8).

5. Détecteur de présence ou de mouvement (1) selon l'une quelconque des revendications précédentes, **caractérisé en ce que** le système pour déterminer la valeur seuil de luminosité (7) est adapté pour limiter la valeur seuil de luminosité $E_s$ à une valeur seuil de luminosité maximum $E_{smax}$ de préférence comprise entre 5 et 20 Lux.

6. Interrupteur crépusculaire avec un commutateur de réglage en charge qui est adapté pour que le commutateur de réglage en charge est activé quand la luminosité ambiante E détectée au moyen d'un capteur de la lumière du jour est inférieure à une valeur seuil de luminosité $E_s$, <u>caractérisé en ce qu</u>'un système pour déterminer la valeur seuil de luminosité est prévu qui détermine automatiquement la valeur seuil de luminosité $E_s$ utilisée dans l'interrupteur crépusculaire et adapte celle-ci dynamiquement à des conditions de luminosité ambiante changeantes, le système pour déterminer la valeur seuil de luminosité étant adapté pour déterminer les valeurs minimales respectives de la luminosité ambiante $E_{min}$ à partir d'une série de valeurs de luminosité ambiante E enregistrées pendant une période de temps T définie, pour déterminer à partir de là une valeur seuil de luminosité minimum $E_{smin}$ et pour ajouter à la valeur seuil de luminosité minimum $E_{smin}$ une valeur d'hystérésis $E_{Hys}$ afin d'obtenir la valeur seuil de luminosité $E_s$.

7. Interrupteur crépusculaire selon la revendication 6, **caractérisé en ce que** le système pour déterminer la valeur seuil de luminosité est adapté pour déterminer la valeur seuil de luminosité $E_s$ d'après l'équation suivante :

$$E_s = (1+k)\, E_{smin} + E_{Offs},$$

où

$E_{smin}$ correspond à la valeur minimum de la luminosité ambiante déterminée à partir d'une série de valeurs de luminosité ambiante E enregistrées pendant une période de temps T définie, les périodes de temps pendant lesquelles un système d'éclairage (4) est allumé n'étant pas prises en considération,

k est une constante pour tenir compte d'une hystérésis et

$E_{Offs}$ est une valeur de décalage choisie qui est de préférence comprise entre 0,5 et 2 Lux.

8. Interrupteur crépusculaire selon la revendication 6 ou 7, **caractérisé en ce que** le système pour déterminer la valeur seuil de luminosité est adapté pour déterminer en outre le gradient $\Delta E/\Delta t$ des changements dans les valeurs de luminosité ambiante et d'utiliser ce gradient pour activer le commutateur de réglage en charge.

9. Interrupteur crépusculaire selon l'une quelconque des revendications 6 à 8, **caractérisé en ce que** le système pour déterminer la valeur seuil de luminosité est adapté pour limiter la valeur seuil de luminosité $E_s$ à une valeur seuil de luminosité maximum $E_{smax}$ de préférence comprise entre 5 et 20 Lux.

10. Procédé pour déterminer la valeur seuil de luminosité dans un interrupteur crépusculaire ou dans un détecteur de présence ou de mouvement dans lequel on utilise une valeur seuil de luminosité $E_s$ déterminée automatiquement et adaptée dynamiquement à des changements de luminosité ambiante pour activer un commutateur de réglage en charge - dans un détecteur de présence ou de mouvement dans le cas d'une détection de personne - et où

    a) on enregistre en permanence les valeurs de luminosité ambiante E,
    b) on détermine une valeur minimum $E_{min}$ respective de la luminosité ambiante en évaluant les valeurs de luminosité ambiante E se situant dans au moins une période de temps T définie et à partir de là une valeur seuil de luminosité minimum $E_{smin}$ que l'on adapte ainsi dynamiquement, les périodes de temps pendant lesquelles un système d'éclairage (4) connecté au commutateur de réglage en charge (3) est allumé n'étant pas prises en considération,
    c) on tient compte d'une hystérésis au moyen d'une constante k,
    d) on tient en outre compte d'une valeur de décalage $E_{Offs}$ et
    e) on détermine la valeur seuil de luminosité

respective $E_s$ d'après la relation $E_s = (1+k)E_{smin} + E_{Offs}$.

11. Procédé selon la revendication 10, **caractérisé en ce que** l'on choisit pour la constante k une valeur comprise entre 0,1 et 0,5.

12. Procédé selon la revendication 10 ou 11, **caractérisé en ce que** l'on choisit pour la période de temps T des heures crépusculaires et nocturnes d'un cycle de 24 heures ou de plusieurs cycles de 24 heures.

13. Procédé selon l'une quelconque des revendications 10 à 12, **caractérisé en ce que** la valeur seuil de luminosité $E_s$ est limitée à une valeur seuil de luminosité $E_{smax}$ maximum comprise de préférence entre 5 et 20 Lux.

14. Procédé selon l'une quelconque des revendications 10 à 13, **caractérisé en ce qu'**on utilise une valeur crépusculaire déterminée automatiquement et adaptée dynamiquement à des changements de luminosité ambiante pour activer un commutateur de réglage en charge - dans un détecteur de présence ou de mouvement dans le cas d'une détection de personne -, le gradient $\Delta E/\Delta t$ des changements de luminosité ambiante étant déterminé pour saisir un crépuscule et le commutateur de réglage en charge étant actionné lorsque s'effectue un petit changement défini $(\Delta E/\Delta t)_{réduit}$ dans la baisse des valeurs de luminosité.

15. Procédé selon la revendication 14, **caractérisé en ce que** l'on utilise en outre une valeur seuil de luminosité maximum $E_{smax}$ définie pour déclencher l'actionnement du commutateur de réglage en charge.

Fig. 1